# EUROPÄISCHE PATENTSCHRIFT

(11) **EP 2 762 291 B1**
(45) Veröffentlichungstag und Bekanntmachung des Hinweises auf die Patenterteilung: **07.04.2021**
(21) Anmeldenummer: 14000264.3
(22) Anmeldetag: 24.01.2014
(51) Int. Cl.: B29C 45/72, B29C 45/73, B29C 45/78, B29C 35/00

(54) **Vorrichtung und Verfahren zur Temperierung eines Formwerkzeugs oder Komponenten einer formgebenden Arbeitsmaschine**
Device and method for the temperature control of a forming tool or component of a forming machine
Dispositif et procédé de thermorégulation d'un outil de formage ou d'un composant d'une machine de formage

(30) Priorität: 04.02.2013 AT 792013
(43) Veröffentlichungstag der Anmeldung: 06.08.2014
(73) Patentinhaber: ENGEL AUSTRIA GmbH, 4311 Schwertberg (AT)
(72) Erfinder: Raschke, Florian, 4694 Ohlsdorf (AT); Steinbichler, Georg, 8786 Rottenmann (AT)
(74) Vertreter: Torggler & Hofinger Patentanwälte

(56) Entgegenhaltungen:
- EP-A1- 1 775 097
- AT-A4- 511 110
- AT-U1- 12 805
- DE-U1- 8 712 481
- DE-U1- 8 712 481
- DE-U1- 20 304 841
- JP-A- 2008 246 940
- JP-A- 2008 246 940
- US-A1- 2009 174 101
- US-A1- 2009 174 101
- Grundfos Vertrieb: "Grundfos Industrie - Immer cool bleiben", www.grundfoss.com , Juli 2000 (2000-07), Seiten 1-4, XP002722690, Gefunden im Internet: URL:http://net.grundfos.com/Appl/WebCAPS/G rundfosliterature-5247.pdf [gefunden am 2014-04-02]
- Grundfos A/S Denmark: "GRUNDFOS DATA BOOKLET -NB, NBE, NK, NKE, Speed-controlled pumps", , 18. November 2008 (2008-11-18), XP002722691, Gefunden im Internet: URL:http://www.industrialwaterequipment.co .uk/pdf/nb-nk-nke.pdf [gefunden am 2014-04-02]
- Tigasfi GmbH: "Datenblatt TriWV 905", , 12. Juni 2009 (2009-06-12), XP002722692, Gefunden im Internet: URL:http://trigasfi.de/pdf/Datenblatt_TriW V.pdf [gefunden am 2014-04-02]
- GRUNDFOS VERTRIEB: "Grundfos Industrie - Immer cool bleiben", INTERNET CITATION, 1 July 2000 (2000-07-01), pages 1-4, XP002722690, Retrieved from the Internet: URL:http://net.grundfos.com/Appl/WebCAPS/G rundfosliterature-5247.pdf [retrieved on 2014-04-02]
- GRUNDFOS A/S DENMARK: "Single-stage end-suction pumps according to EN 733; Speed-controlled pumps", INTERNET CITATION, 18 November 2008 (2008-11-18), page 35, XP002722691, Retrieved from the Internet: URL:http://www.industrialwaterequipment.co .uk/pdf/nb-nk-nke.pdf [retrieved on 2014-04-02]

## Beschreibung

Die vorliegende Erfindung betrifft eine Temperiervorrichtung für ein Formwerkzeug oder Komponenten einer formgebenden Arbeitsmaschine mit den Merkmalen des Oberbegriffs des Anspruchs 1 sowie ein Verfahren zur Temperierung eines Formwerkzeugs oder Komponenten einer formgebenden Arbeitsmaschine gemäß den Merkmalen des Oberbegriffs des Anspruchs 7.

Aus der DE 87 12 481 U1 ist eine Vorrichtung zur Regelung von Wärmeströmen bekannt, wobei in jedem von drei Leitungszweigen einer Kunststoff- und/oder Kautschukverarbeitungsmaschine eine geregelte Pumpe angeordnet ist.

Die US 2009/0174101 A1 offenbart eine Kunststoffformmaschine, welche für jede Formhälfte eine separate Versorgung mit Temperiermedium aufweist. Außerdem existiert ein getrennter Medienkreislauf für die Wärmeabfuhr.

Die folgende Diskussion des Standes der Technik erfolgt beispielhaft anhand einer Spritzgussmaschine als Spezialfall einer formgebenden Arbeitsmaschine und anhand eines Spritzgießwerkzeugs einer solchen Spritzgussmaschine als Beispiel für ein Formwerkzeug einer allgemeinen formgebenden Arbeitsmaschine. Die Offenbarung der folgenden Anmeldung ist aber nicht auf diesen Spezialfall beschränkt.

Unter Temperieren wird in der vorliegenden Anmeldung Kühlen oder Heizen verstanden.

Beim Stand der Technik wird die wenigstens eine Pumpe mit konstanter Förderleistung betrieben. Entweder man verwendet die sich durch die Förderleistung (Fördermenge oder Druck usw.) und den hydraulischen Widerstand der wenigstens einen Zweigleitung ergebende Durchflussmenge oder man setzt Drosseln ein, um eine gewünschte niedrigere Durchflussmenge zu erzielen.

Daraus resultieren verschiedene Nachteile:
- ein konstant hoher Energieverbrauch,
- verringerte Lebensdauer des Pumpensystems,
- Kosten für die Rücktemperierung des Temperiermediums aufgrund eines zu hohen Volumenstroms,
- höhere Leckageanfälligkeit sowie
- unnötig hoher Druck im Temperiersystem.

Aufgabe der Erfindung ist es, die oben beschriebenen Nachteile zumindest teilweise aufzuheben.

Diese Aufgabe wird durch eine Temperiervorrichtung mit den Merkmalen des Anspruchs 1 und ein Verfahren mit den Merkmalen des Anspruchs 7 gelöst.

Es sind wenigstens zwei Temperierzweige vorgesehen, welche parallel geschaltet sind.

Um die Regelung oder Steuerung so gut wie möglich zu gestalten, ist in jedem der wenigstens zwei Temperierzweige wenigstens ein Sensor vorgesehen, durch den wenigstens eine der Größen aus der Gruppe Temperatur, Durchflussmenge, Druck, Wärmemenge, Temperaturdifferenz erfassbar ist, wobei Signale der Sensoren der Steuer- oder Regeleinrichtung zuführbar sind.

Durch die Erfindung kann die oben beschriebene im Stand der Technik zwingend erforderliche Drosselung reduziert werden. Da der Energieverbrauch proportional dem Produkt aus Durchflussmenge und Druckverlust ist, wirkt sich ein Entfall der Drosselung positiv auf den Energieverbrauch aus.

Zur individuellen Regelung der Durchflussmengen in den Temperierzweigen ist in wenigstens einem der wenigstens zwei Temperierzweige wenigstens eine Drosselvorrichtung vorgesehen.

Da dies besonders energieeffizient ist, ist es erfindungsgemäß vorgesehen, dass jeder Temperierzweig individuell gedrosselt wird, wobei wenigstens einer der Temperierzweige zumindest im Wesentlichen nicht gedrosselt wird.

Vorteilhafte Ausführungsformen der Erfindung sind in den abhängigen Ansprüchen definiert.

Als Temperiermedium ist bevorzugt Wasser (gasförmig oder flüssig) oder Öl vorgesehen. Es können jedoch auch andere Fluide, wie beispielsweise Kohlendioxid oder Stickstoff, verwendet werden. Das Temperiermedium kann kontinuierlich oder pulsartig gefördert werden.

Besonders bevorzugt ist vorgesehen dass, die Temperiervorrichtung als Beistellvorrichtung für eine formgebende Arbeitsmaschine ausgebildet ist und einen oder mehrere Temperierzweige aufweist. Die Beistellvorrichtung kann entweder freistehend neben der formgebenden Arbeitsmaschine angeordnet sein oder an dieser verbaut sein.

Am einfachsten kann die Regelung bzw. Steuerung der Pumpe gestaltet werden, indem diese über ihre Drehzahl geregelt oder gesteuert wird.

In dem Fall, dass das Pumpensystem mehr als eine Pumpe umfasst, kann es vorteilhaft sein, alternativ oder zusätzlich zur Regelung bzw. Steuerung der Pumpe(n) einzelne Pumpen des Pumpensystems abschaltbar und/oder zuschaltbar zu gestalten. Dadurch würde sich eine Art Stufensteuerung bzw. -regelung ergeben.

Die Drosselvorrichtung kann zum Beispiel manuell oder durch die Steuer- oder Regeleinrichtung einstellbar sein. Die Drosselvorrichtung kann zum Beispiel ein Durchflussventil sein, deren Durchflussgrad stufenlos einstellbar ist.

Schutz begehrt wird auch für eine formgebende Arbeitsmaschine insbesondere Spritzgießmaschine, Druckgussmaschine oder Pressmaschine, mit einer erfindungsgemäßen Temperiervorrichtung.

Des Weiteren wird Schutz begehrt für eine Anordnung mit wenigstens zwei formgebenden Arbeitsmaschinen und einer erfindungsgemäßen Temperiervorrichtung, wobei die Formwerkzeuge der wenigstens zwei formgebenden Arbeitsmaschinen seriell oder parallel durch die Temperiervorrichtung temperierbar sind.

Durch die Anpassung der Förderleistung (Fördermenge oder Druck usw.) an den Durchflussbedarf des nicht gedrosselten Temperierzweigs, kann die Pumpe mit niedrigstmöglichem Energieaufwand laufen.

Die Steuer- oder Regeleinrichtung kann Bestandteil der Spritzgießmaschinensteuerung, einer externen Steuerung, Beistellvorrichtung oder eines zentralen Leitrechnersystems sein.

Das Pumpensystem kann Bestandteil der Spritzgießmaschine, einer Beistellvorrichtung oder einer zentralen Medienversorgung sein.

Weitere Vorteile und Einzelheiten der Erfindung ergeben sich anhand der Figuren sowie der dazugehörigen Figurenbeschreibung.

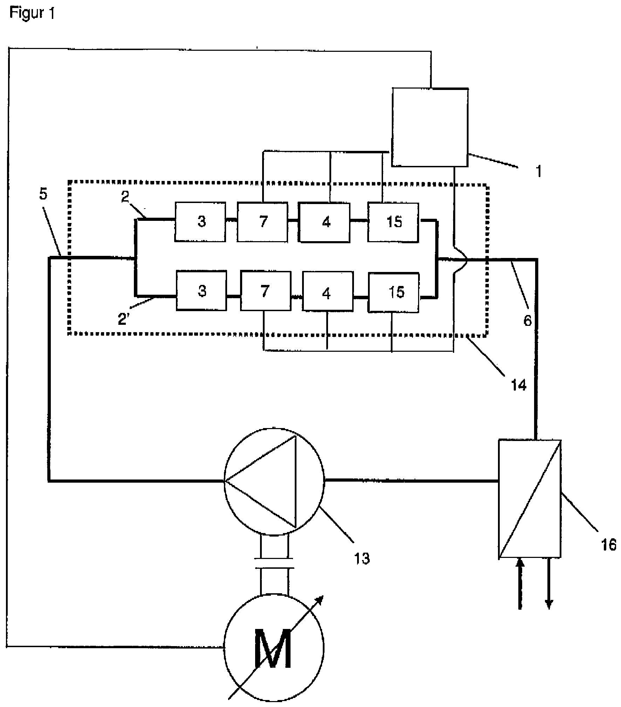

Dabei zeigt Figur 1 eine schematische Darstellung einer erfindungsgemäßen Temperiervorrichtung 14. Sie verfügt über zwei Temperierzweige 2, die durch ein Formwerkzeug 3 führen. In den Temperierzweigen 2 sind auch Durchflusssensoren 7, Temperatursensoren 4 sowie Durchflussventile 15 vorhanden. Die Durchflusssensoren 7 können natürlich auch als ein Bauteil zusammen mit den Durchflussventilen 15 ausgeführt sein. Des Weiteren ist eine Regel- oder Steuereinrichtung 1 vorgesehen - in diesem Ausführungsbeispiel eine Regeleinrichtung. Diese ist mit den Durchflusssensoren 7, den Temperatursensoren 4 sowie den Durchflussventilen 15 verbunden sind. Die Temperatursensoren 4 stellen eine Alternative zur Durchflussmessung dar.

Die zwei Temperierzweige 2 sind jeweils mit dem Vorlauf 5 und dem Rücklauf 6 verbunden. Eine Pumpe 13 fördert Temperiermedium aus dem Rücklauf 6 in den Vorlauf 5. Des Weiteren ist im Rücklauf 6 ein optionaler Wärmetauscher 16 angeordnet. Auch die Pumpe 13 ist zur Regelung mit der Regeleinrichtung 1 verbunden.

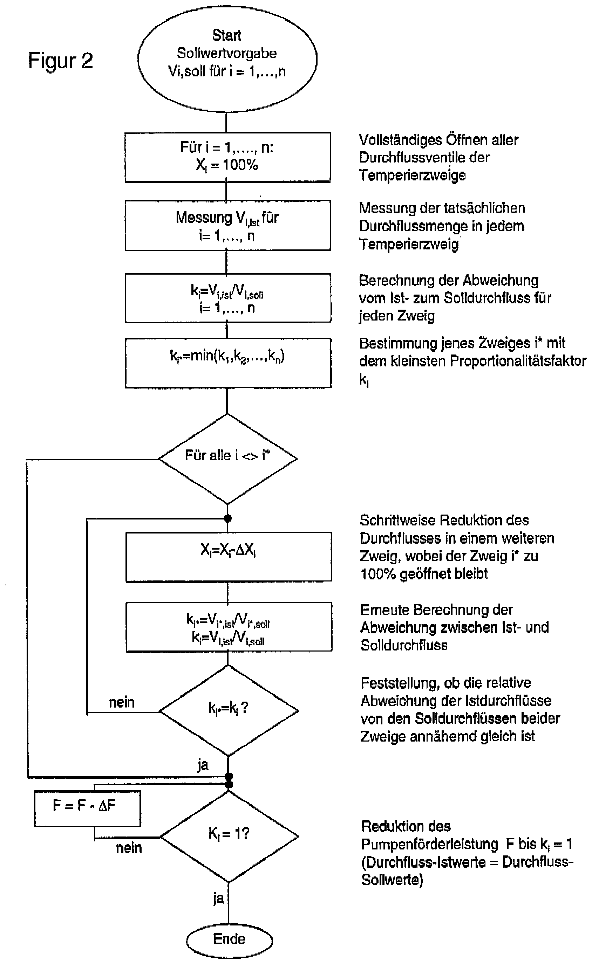

Figur 2 ist ein Flussdiagramm zur Verdeutlichung eines besonders bevorzugten Ausführungsbeispiels eines erfindungsgemäßen Verfahrens. Dabei bedeuten:
i ... Fortlaufende Nummer der Temperierzweige 2
n ... Anzahl der verwendeten Temperierzweige 2
Xi ... Stellgrad des Durchflussventils 15 im Temperierzweig i [%]
Vi ... Volumenstrom im Temperierkreis i
F ... Förderstrom Pumpensystem

Jener Temperierzweig i*, welcher zumindest annähernd zu 100 % geöffnet bleibt, kann einem Benutzer als für das Gesamtsystem bestimmender Zweig ("Flaschenhals") angezeigt werden. Dadurch hat der Benutzer die Möglichkeit den hydraulischen Widerstand dieses Temperierzweiges 2 zum Beispiel durch Entfernen von Schnellkupplungen oder Reduzierung von Schlauchlängen gezielt zu verringern. Dadurch kann der Förderstrom der Pumpe 13 weiter reduziert werden bei gleichzeitiger Öffnung der Durchflussventile 15 der weiteren Temperierzweige 2.

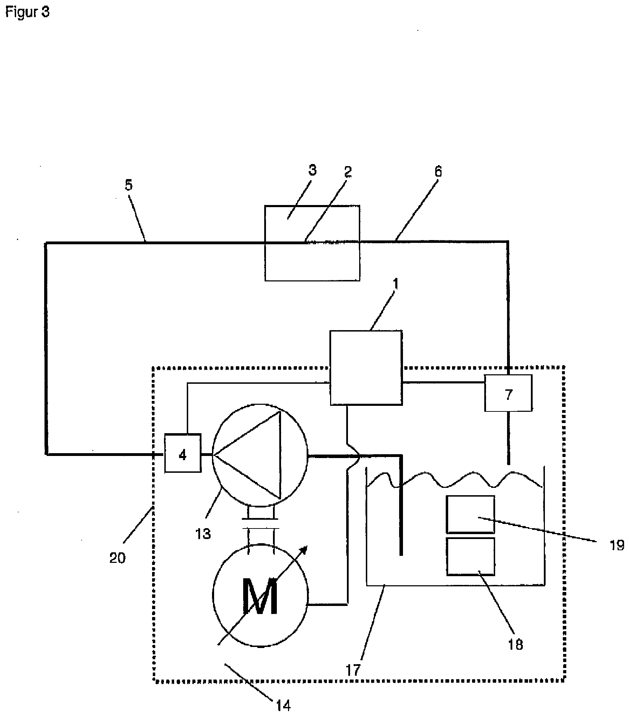

Im Unterschied zur Figur 1 ist in Figur 3 nur ein Temperierzweig 2 vorgesehen. Die Temperiervorrichtung 14 ist als Beistellvorrichtung ausgebildet. In einem gemeinsamen Gehäuse 20 sind angeordnet:
- Pumpe 13
- Durchflusssensor 7
- Tank 17 für Temperiermedium
- Heizung 18 zum Aufheizen des Temperiermediums im Tank 17
- Kühlung 19 zur Kühlung des Temperiermediums im Tank 17
- optional ein Temperatursensor 4 sowie
- eine Regel- oder Steuereinrichtung 1.

## Patentansprüche

1. Temperiervorrichtung (14) für ein Formwerkzeug (3) oder Komponenten einer formgebenden Arbeitsmaschine mit
- wenigstens zwei parallel geschalteten Temperierzweigen (2, 2'), welche mit einem Vorlauf (5) verbunden sind, und
- einem wenigstens eine Pumpe (13) umfassenden Pumpensystem, welches zur Förderung von Temperiermedium im Vorlauf (5) ausgebildet ist,
wobei in jedem der wenigstens zwei Temperierzweige (2, 2') wenigstens ein Sensor vorgesehen ist, durch den wenigstens eine der Größen aus der Gruppe Temperatur, Durchflussmenge, Druck erfassbar ist und wobei in wenigstens einem der wenigstens zwei Temperierzweige wenigstens eine Drosselvorrichtung vorgesehen ist, **dadurch gekennzeichnet, dass** eine Steuer- oder Regeleinrichtung (1) zur Regelung oder Steuerung einer Förderleistung des Pumpensystems vorgesehen ist, welcher Signale des wenigstens einen Sensors zuführbar sind, und dass die Temperiervorrichtung (14) dazu ausgebildet ist, jeden Temperierzweig (2, 2') individuell zu drosseln und wenigstens einen der Temperierzweige (2, 2') zumindest im Wesentlichen nicht zu drosseln.

2. Temperiervorrichtung nach Anspruch 1, **dadurch gekennzeichnet, dass** zur Regelung- oder Steuerung der wenigstens einen Pumpe wenigstens eine Drehzahl der wenigstens einen Pumpe regel- oder steuerbar ist.

3. Temperiervorrichtung nach Anspruch 1 oder 2, **dadurch gekennzeichnet, dass** zur Regelung oder Steuerung des Pumpensystems Pumpen des Pumpensystems abschaltbar und/oder zuschaltbar sind.

4. Temperiervorrichtung nach einem der Ansprüche 1 bis 3, **dadurch gekennzeichnet, dass** die Temperiervorrichtung (14) als Beistellvorrichtung für eine formgebende Arbeitsmaschine ausgebildet ist und einen oder mehrere Temperierzweige (2, 2') aufweist.

5. Formgebende Arbeitsmaschine, insbesondere Spritzgießmaschine, Druckgussmaschine oder Pressmaschine, mit einer Temperiervorrichtung nach einem der Ansprüche 1 bis 4.

6. Anordnung mit wenigstens zwei formgebenden Arbeitsmaschinen und einer Temperiervorrichtung nach einem der Ansprüche 1 bis 4, wobei die Formwerkzeuge der wenigstens zwei formgebenden Arbeitsmaschinen seriell oder parallel durch die Temperiervorrichtung temperierbar sind.

7. Verfahren zur Temperierung eines Formwerkzeugs (3) oder Komponenten einer formgebenden Arbeitsmaschine, wobei
- durch ein wenigstens eine Pumpe umfassendes Pumpensystem Temperiermedium durch wenigstens zwei parallel geschaltete Temperierzweige (2) gefördert wird,
- in jedem der wenigstens zwei Temperierzweige (2, 2') wenigstens eine der Größen aus der Gruppe Temperatur, Durchflussmenge, Druck erfasst werden und
- das Temperiermedium in wenigstens einem der wenigstens zwei Temperierzweige (2, 2') mittels einer Drosselvorrichtung gedrosselt wird,
**dadurch gekennzeichnet, dass** die wenigstens eine Größe einer Steuer-oder Regeleinrichtung (1) zur Regelung oder Steuerung einer Förderleistung des Pumpensystems zugeführt wird, wobei jeder Temperierzweig (2, 2') individuell gedrosselt wird und wenigstens einer der Temperierzweige (2, 2') zumindest im Wesentlichen nicht gedrosselt wird.

8. Verfahren nach Anspruch 7, **dadurch gekennzeichnet, dass** zur Regelung oder Steuerung der wenigstens einen Pumpe (13) wenigstens eine Drehzahl der wenigstens einen Pumpe (13) geregelt oder gesteuert wird.

9. Verfahren nach Anspruch 7 oder 8, **dadurch gekennzeichnet, dass** zur Regelung oder Steuerung des Pumpensystems Pumpen (13) des Pumpensystems abgeschaltet und/oder zugeschaltet werden.

## Claims

1. A temperature control device (14) for a shaping tool (3) or components of a shaping working machine comprising
- at least two temperature control branches (2, 2') parallel-connected to a feed (5), and
- a pump system including at least one pump (13) adapted for delivery of temperature control medium in the feed (5),
wherein in each of the at least two temperature control branches (2, 2') at least one sensor is provided, with which at least one parameter of the group of temperature, through-flow amount, pressure can be detected, and wherein in at least one of the at least two temperature control branches (2, 2') at least one throttle device is provided,
**characterised in that** that there is provided a control or regulating device (1) for regulating or controlling a delivery of the pump system, to which signals from the at least one sensor can be fed, and **in that** the temperature control device (14) is adapted to throttle each of the at least two temperature control branches (2, 2') individually and to at least essentially not throttle at least one of the at least two temperature control branches (2, 2').

2. A temperature control device according to claim 1 **characterised in that** to regulate or control the at least one pump at least one rotary speed of the at least one pump can be regulated or controlled.

3. A temperature control device according to one of claims 1 or 2 **characterised in that** for controlling or regulating the pump system pumps of the pump system can be shut down and/or switched on.

4. A temperature control device according to one of claims 1 to 3 **characterised in that** the temperature control device (14) is in the form of an accessory device for a shaping working machine and has one or more temperature control branches (2, 2').

5. A shaping working machine, in particular an injection moulding machine, a die casting machine or a pressing machine, having a temperature control device according to one of claims 1 to 4.

6. An arrangement comprising at least two shaping working machines and a temperature control device according to one of claims 1 to 4, wherein the shaping tools of the at least two shaping working machines can be temperature-controlled by the temperature control device in serial or parallel relationship.

7. A method of temperature control of a shaping tool (3) or components of a shaping working machine, wherein
- temperature control medium is conveyed through at least two parallel connected temperature control branches (2) by a pump system including at least one pump,
- in each of the at least two temperature control branches (2, 2') at least one parameter of the group of temperature, through-flow amount, pressure can be detected and
- the temperature control medium is throttled by means of a throttle device in at least one of the at least two temperature control branches (2, 2'),
**characterised in that** the at least one parameter from the group of temperature, through-flow amount and pressure is fed to a closed or open loop control, wherein each of the at least two temperature control branches (2, 2') is throttled individually and at least one of the at least two temperature control branches (2, 2') is at least essentially not throttled.

8. A method according to claim 7 **characterised in that** for regulation or control of the at least one pump (13) at least one rotary speed of the at least one pump (13) is regulated or controlled.

9. A method according to claim 7 or 8 **characterised in that** for regulation or control of the pump system pumps (13) of the pump system are shut down and/or switched on.

## Revendications

1. Dispositif d'équilibrage de température (14) pour un outil de formage (3) ou des composants d'une machine-outil de formage avec
- au moins deux branches d'équilibrage de température commutées en parallèle (2, 2'), qui sont reliées à un conduit d'alimentation (5), et
- un système de pompes comprenant au moins une pompe (13), lequel est conçu pour acheminer le milieu d'équilibrage de température dans le conduit d'alimentation (5),
dans lequel dans chacune des au moins deux branches d'équilibrage de température (2, 2') est prévu au moins un capteur, par lequel peut être détectée au moins une des grandeurs du groupe température, débit de passage, pression et dans lequel dans au moins une des au moins deux branches d'équilibrage de température est prévu au moins un dispositif d'étranglement, **caractérisé en ce qu'**est prévu un dispositif de commande ou de réglage (1) destiné au réglage ou à la commande d'une capacité de transport du système de pompes, auquel peuvent être fournis des signaux du au moins un capteur, et **en ce que** le dispositif d'équilibrage de température (14) est conçu pour étranger individuellement chaque branche d'équilibrage de température (2, 2') et ne pas étrangler, au moins essentiellement, au moins une des branches d'équilibrage de température (2, 2').

2. Dispositif d'équilibrage de température selon la revendication 1, **caractérisé en ce que** pour le réglage ou la commande de la au moins une pompe, au moins une vitesse de rotation de au moins une pompe peut être réglée ou commandée.

3. Dispositif d'équilibrage de température selon la revendication 1 ou 2, **caractérisé en ce que** pour le réglage ou la commande du système de pompes, des pompes du système de pompes peuvent être débranchées et / ou raccordées.

4. Dispositif d'équilibrage de température selon l'une des revendications 1 à 3, **caractérisé en ce que** le dispositif d'équilibrage de température (14) est conçu comme un dispositif complémentaire pour une machine-outil de formage et présente une ou plusieurs branches d'équilibrage de température (2, 2').

5. Machine-outil de formage, plus particulièrement presse d'injection, machine à coulée sous pression ou machine à presser, avec un dispositif d'équilibrage de température selon l'une des revendications 1 à 4.

6. Dispositif avec au moins deux machines-outils de formage et un dispositif d'équilibrage de température selon l'une des revendications 1 à 4, dans lequel les outils de formage des au moins deux machines-outils de formage peuvent être mis en équilibre de température en série ou en parallèle par le dispositif d'équilibrage de température.

7. Procédé d'équilibrage de température d'une machine-outil (3) ou de composants d'une machine-outil de formage, dans lequel
- par un système de pompes comprenant au moins une pompe, un milieu d'équilibrage de température est acheminé par au moins deux branches d'équilibrage de température (2) commutées en parallèle,
- dans chacune des au moins deux branches d'équilibrage de température (2, 2') est détectée au moins une des grandeurs du groupe température, débit de passage, pression et
- le milieu d'équilibrage de température est étranglé dans au moins une des deux branches d'équilibrage de température (2, 2') au moyen d'un dispositif d'étranglement,
**caractérisé en ce que** la au moins une grandeur est fournie à un dispositif de commande ou de réglage (1) pour régler ou commander une capacité de transport du système de pompes, dans lequel chaque branche d'équilibrage de température (2, 2') est étranglée individuellement et au moins une des branches d'équilibrage de température (2, 2') n'est pas étranglée, au moins essentiellement.

8. Procédé selon la revendication 7, **caractérisé en ce que** pour le réglage ou la commande de la au moins une pompe (13), au moins une vitesse de rotation de la au moins une pompe (13) est réglée ou commandée.

9. Procédé selon la revendication 7 ou 8, **caractérisé en ce que** pour régler ou commander le système de pompes, des pompes (13) du système de pompes sont mises hors circuit et / ou raccordées.
